# EUROPEAN PATENT SPECIFICATION

(11) **EP 2 765 789 B1**
(45) Date of publication and mention of the grant of the patent: **05.10.2022**
(21) Application number: 12838230.6
(22) Date of filing: 02.10.2012
(51) Int. Cl.: G01H 11/08, B06B 1/06, G01S 7/521, G01S 15/931, G10K 9/22

(54) **ULTRASONIC SENSOR**
ULTRASCHALLSENSOR
CAPTEUR ULTRASONORE

(30) Priority: 05.10.2011 JP 2011220673
(43) Date of publication of application: 13.08.2014
(73) Proprietor: Murata Manufacturing Co., Ltd., Nagaokakyo-shi, Kyoto 617-8555 (JP)
(72) Inventor: KAWATSUMA, Masato, Nagaokakyo-shi Kyoto 617-8555 (JP)
(74) Representative: Reeve, Nicholas Edward
(86) International application number: PCT/JP2012/075448
(87) International publication number: WO 2013/051525

(56) References cited:
- EP-A1- 1 924 121
- JP-A- H04 225 157
- JP-A- H11 187 491
- JP-A- 2004 260 239
- JP-A- 2011 250 327
- KR-A- 20100 063 866

## Description

### Technical Field

The present invention relates to an ultrasonic sensor, and, more particularly, to an ultrasonic sensor including a piezoelectric element and a pin terminal, which is electrically connected to the piezoelectric element, and being used in, for example, a corner sonar or a back sonar of an automobile.

### Background Art

An ultrasonic sensor detects an obstacle or a target by intermittently transmitting an ultrasonic pulse signal and receiving a reflection wave reflected after the transmitted ultrasonic pulse signal has reached the obstacle or the target (refer to, for example, International Publication No. 2007/094184). The ultrasonic sensor is used in, for example, a back sonar or a corner sonar of an automobile, or a parking spot sensor that detects the distance to an obstacle, such as a side wall, when parallel parking.

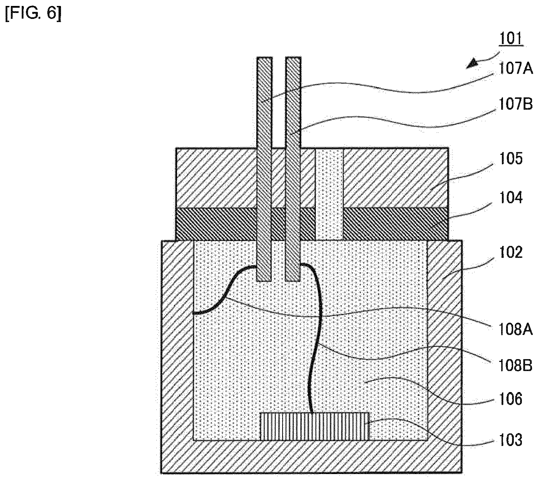

Fig. 6 is a sectional view of an exemplary structure of an existing ultrasonic sensor. An ultrasonic sensor 101 includes a case 102, a piezoelectric element 103, a damping member 104, a substrate 105, foam resin 106, pin terminals 107A and 107B, and lead wires 108A and 108B. The case 102 has a cylindrical shape and a bottom, and is formed of a conductive material, such as a metal. The piezoelectric element 103 is formed of piezoelectric ceramics, and includes a disc-shaped piezoelectric substrate and a pair of electrodes that are provided on opposing principal surfaces of the piezoelectric substrate. The piezoelectric element 103 is bonded to the case 102 using, for example, a conductive adhesive so that one of the electrodes contacts a bottom surface in an opening of the case 102 and is electrically connected to the case 102. The damping member 104 is provided so as to close the opening of the case 102. The substrate 105 is provided on the damping member 104. Through holes are formed in the substrate 105 and the damping member 104. The foam resin 106 is injected into the opening of the case 102 from one of the through holes, and fills the interior of the case 102 and the interior of the through hole. Each of the pin terminals 107A and 107B has the shape of a straight rod, and is inserted into the opening of the case 102 via the corresponding one of the through holes. In the opening of the case 102, the lead wire 108A is joined to an end of the pin terminal 107A and to the case 102 using solder, and electrically connects the pin terminal 107A and the case 102 to each other. Therefore, the pin terminal 107A is electrically connected to the piezoelectric element 103 via the lead wire 108A and the case 102. In the opening of the case 102, the lead wire 108B is joined to an end of the pin terminal 107B and to the piezoelectric element 103 using solder, and electrically connects the end of the pin terminal 107B and the piezoelectric element 103 to each other.

In an ultrasonic sensor having an existing structure such as that shown in Fig. 6, the lead wires are deformed by application of an outside force to the pin terminals. If the lead wires are deformed over and over again by the application of the outside force to the pin terminals a plurality of times, each pin terminal and the piezoelectric element may become electrically disconnected from each other as a result of fracture of connection portions between the pin terminals and the corresponding lead wires. In addition, when a large outside force is applied to the pin terminals at one time, each of the pin terminals and the piezoelectric element may become electrically disconnected from each other as a result of fracture of the connection portions between the pin terminals and the corresponding lead wires; or members, such as the foam resin and the damping member, may fracture. In particular, when a large outside force acting in a direction in which the pin terminals are pulled out from the case is applied to the pin terminals, the connection portions between the pin terminals and the corresponding lead terminals, and the members tend to fracture. Therefore, there is a demand for an ultrasonic sensor having a structure that is more highly resistant to outside force.

Accordingly, we have appreciated that it would be desirable to provide an ultrasonic sensor in which a pin terminal and a piezoelectric element are less likely to be electrically disconnected from each other, and which is highly resistant to outside force. KR 2010 0063866 discloses a similar ultrasonic sensor comprising a wire connecting a piezoelectric element to a terminal pin.

### Summary of Invention

An ultrasonic sensor according to the present invention includes a case, a piezoelectric element, a pin terminal, a flexible substrate, and a damping member. The case is a cylindrical case having a bottom, which includes a bottom plate and a side wall. The piezoelectric element is disposed at the bottom plate in the case. One of end portions of the pin terminal is disposed in an opening of the case. The other end portion of the pin terminal is disposed outside of the case. The flexible substrate is a strip-shaped flexible substrate including a first end and a second end. The first end is connected to the one of the end portions of the pin terminal. The second end is connected to the piezoelectric element. The damping member seals the one of the end portions of the pin terminal and the flexible substrate in the case. The flexible substrate is bent and disposed in the opening of the case so that the first end connected to the one of the end portions of the pin terminal extends in a same direction as the one of the end portions of the pin terminal and is connected to the pin terminal over a substantial portion of the end portion of the pin terminal and so that the flexible substrate bends from the first end, extends towards the side wall of the case, and terminates in the second end.

In the above-described ultrasonic sensor, it is desirable that the one of the end portions of the pin terminal be soldered to the first end of the flexible substrate.

This makes it possible to connect the pin terminal by a simple process, and to enhance reliability of the connection.

According to embodiments of the present invention, a flexible substrate that is elastically deformed is used instead of a lead wire that undergoes plastic deformation, and it is possible to prevent electrical disconnection between the pin terminal and the piezoelectric element caused by fracture of the connection portion with the pin terminal. In addition, a strip-shaped flexible substrate is used and the area of contact between the flexible substrate and the damping member is increased, so that even if the flexible substrate is deformed, the damping member is less likely to fracture.

In addition, even if an outside force acting in the direction in which the pin terminal is pulled out from the case is applied to the pin terminal, a portion of the flexible substrate extending towards a side wall of the case is flexed. Therefore, shear stress generated by the outside force does not concentrate at the connection portion between the flexible substrate and the pin terminal. Consequently, it is possible to prevent fracture of the connection portion between the flexible substrate and the pin terminal. Further, even a horizontal outside force that tilts the pin terminal or an outside force acting in a direction in which the pin terminal is pushed into the case is applied to the pin terminal, the flexible substrate is similarly flexed. Therefore, it is possible to prevent the connection portion between the flexible substrate and the pin terminal from fracturing.

Further, the direction in which the first end of the flexible substrate extends and the direction in which one of the end portions of the pin terminal extends are made the same, and it is possible to reduce the curvature of the flexible substrate and to reduce the elastic force of the flexible substrate. Therefore, it is possible to reliably prevent the occurrence of, for example, resin fracture and undesired deformation and fracture of the pin terminal and of the connection portion between the flexible substrate and the pin terminal.

### Brief Description of Drawings

Fig. 1 shows an exemplary structure of an ultrasonic sensor according to a first embodiment of the present invention.
Fig. 2 shows stress that is applied to a connection portion in the ultrasonic sensor according to the first embodiment of the present invention and stress that is applied to a connection portion in an ultrasonic sensor according to a comparative example.
Fig. 3 shows the relationship between loading direction and fracture mode in an actual device test.
Fig. 4 shows an exemplary structure of an ultrasonic sensor according to a second embodiment of the present invention.
Fig. 5 shows an exemplary structure of an ultrasonic sensor according to a third embodiment of the present invention.
Fig. 6 is a sectional view of an exemplary structure of an existing ultrasonic sensor.

### Description of Embodiments

### «First Embodiment»

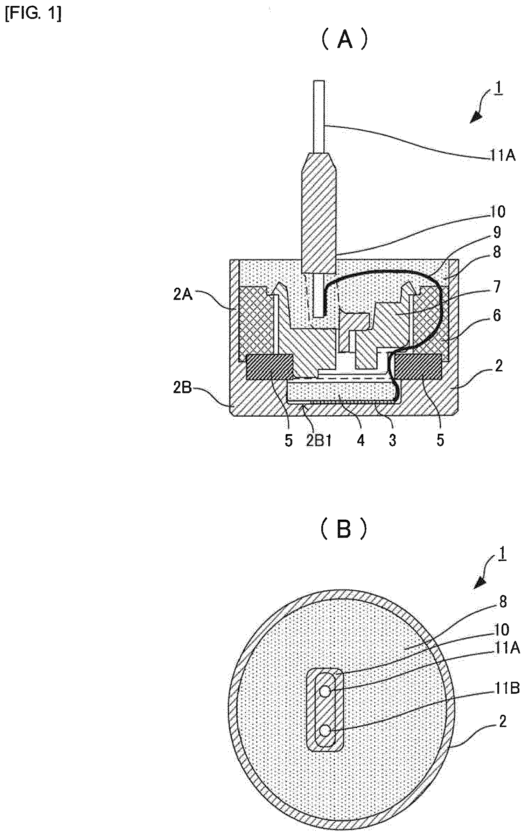

Fig. 1(A) is a sectional view of an ultrasonic sensor 1 according to a first embodiment of the present invention. Fig. 1(B) is a plan view of the ultrasonic sensor 1. Fig. 1(B) shows a back side of the ultrasonic sensor 1.

The ultrasonic sensor 1 includes a case 2, a piezoelectric element 3, a sound absorbing member 4, a reinforcing member 5, a supporting member 6, a cushioning member 7, a damping member 8, a flexible substrate 9, a terminal holding member 10, and pin terminals 11A and 11B.

The case 2 is a cylindrical case having a bottom. One end side of the case 2 is closed and the other end side of the case 2 is open. The case 2 includes a cylindrical side wall 2A and a disc-shaped bottom plate 2B. As shown in Fig. 1(B), an opening of the case 2 is circular in plan view. At the side wall 2A, an open-side portion thereof is thin-walled and the inside diameter of the opening is large. At the side wall 2A, a bottom-plate-2B-side portion thereof is thick-walled and the inside diameter of the opening is small. The bottom plate 2B includes a recessed portion 2B1 near the center. The recessed portion 2B1 includes a bottom surface portion and a side wall portion. The case 2 is, for example, a light member having a high elastic modulus and formed of aluminum. The case 2 is forged. The material of the case 2 is not limited to a conductive material, such as aluminum. The material of the case 2 may also be an insulating material.

The piezoelectric element 3 is formed of piezoelectric ceramics. The piezoelectric element 3 includes a disc-shaped piezoelectric substrate and a pair of electrodes that are provided on opposing principal surfaces of the piezoelectric substrate. The piezoelectric element 3 is a plate-shaped piezoelectric element. By applying drive voltages to the pair of electrodes, the piezoelectric element 3 undergoes spreading vibration in an in-plane direction. The piezoelectric element 3 is disposed in the recessed portion 2B1 of the case 2, and is joined to the bottom plate 2B. More specifically, the piezoelectric element 3 is joined to the case 2 so that one of the pair of electrodes contacts the bottom surface portion of the recessed portion 2B1. In other words, the piezoelectric element 3 is disposed at the bottom surface portion of the recessed portion 2B1. The piezoelectric element 3 and the bottom plate 2B are joined to each other and form a bimorph vibrator. The bimorph vibrator is caused to undergo bending vibration by spreading vibration of the piezoelectric element 3. Therefore, the bottom surface portion of the recessed portion 2B1 becomes a principal vibration region of the case 2.

The sound absorbing member 4 is, for example, a plate-shaped sound absorbing member formed of polyester felt or the like. The sound absorbing member 4 is provided for absorbing undesired sound waves that are emitted from the piezoelectric element 3 to the open side of the case 2. The sound absorbing member 4 is disposed in the recessed portion 2B1 of the case 2 and is bonded on the piezoelectric element 3.

The reinforcing member 5 is a ring-shaped member having an opening in its center, and has a high acoustic impedance. The reinforcing member 5 is formed of a material, such as stainless steel or zinc, that is denser and more rigid than the material of the case 2. The reinforcing member 5 functions as a weight. The reinforcing member 5 may be formed of the same material (aluminum) as the case 2 by adjusting the size, such as the thickness. In addition, the reinforcing member 5 contacts an inner peripheral surface of a thick-walled portion of the side wall 2A and is disposed on the bottom plate 2B of the case 2. By providing the reinforcing member 5 in this way, the rigidity of a portion of the case 2 that surrounds the recessed portion 2B1 is increased, so that transmission of vibration of the bottom plate 2B of the case 2 to the side wall 2A of the case 2 can be suppressed.

The supporting member 6 is a ring-shaped member having an opening in its center. In order to support the cushioning member 7 without contacting it with the case 2, the supporting member 6 is provided between the cushioning member 7 and the side wall 2A of the case 2. The supporting member 6 is formed by filling a space between a mold and the case 2 with resin while the mold is disposed in the case 2 and removing the mold after hardening the resin. As for the supporting member 6, which may be formed in the case 2 using a mold and the case 2 in this way, a support previously formed with a desired shape may be disposed in the case 2. By providing the supporting member 6, it is possible to suppress transmission of vibration of the bottom plate 2B of the case 2 to the cushioning member 7 via the side wall 2A, and to suppress vibration of the side wall 2A of the case 2.

The cushioning member 7 is a cup-shaped member formed of an elastic material such as silicone rubber or urethane resin. The cushioning member 7 includes a projecting portion, provided at a lower portion thereof and engaging the opening of the reinforcing member 5, and an opening, provided at an upper portion thereof and with which the terminal holding member 10 engages. By providing the cushioning member 7, it is possible to suppress transmission of vibration of the bottom plate 2B of the case 2 to the terminal holding member 10 via the side wall 2A.

The terminal holding member 10 is an L-shaped member formed of resin such as polybutylene terephthalate (PBT), and holds the pin terminals 11A and 11B so that the pin terminals 11A and 11B are oriented along an axis passing through the center of the opening of the case 2. A lower portion of the terminal holding member 10 is bent so as to engage an opening in a top portion of the cushioning member 7. The terminal holding member 10 includes a projecting portion that is provided at a bottom surface. Two through holes into which the pin terminals 11A and 11B are inserted are provided in a central portion of the terminal holding member 10.

The pin terminals 11A and 11B are linear metallic pins to which driving voltages of the piezoelectric element 3 are applied, and are held by the terminal holding member 10. More specifically, the pin terminals 11A and 11B are inserted into the through holes of the terminal holding member 10, respectively. One of end portions of each of the pin terminals 11A and 11B is exposed from the corresponding through hole of the terminal holding member 10, and is disposed in the opening of the case 2. The other end portion of each of the pin terminals 11A and 11B protrudes from an upper end of the terminal holding member 10, and is disposed outside of the case 2.

The flexible substrate 9 is a strip-shaped substrate having a wide width, and electrically connects each of the pin terminals 11A and 11B and the piezoelectric element 3 to each other. The flexible substrate 9 includes a first end and a second end. The first end extends in the same direction as the one of the end portions of each of the pin terminals 11A and 11B, and is connected to the pin terminals 11A and 11B. The second end is connected to the electrodes of the piezoelectric element 3 with a conductive adhesive. The flexible substrate 9 is bent and disposed in the opening of the case 2 so as to be bent from the first end, extend towards the side wall 2A of the case 2, pass through the supporting member 6, and terminate in the second end. The supporting member 6 is provided by being subjected to filling and by being hardened while the piezoelectric element 3 and the flexible substrate 9 are disposed in the opening of the case 2. Although Fig. 1(A) shows only the pin terminal 11A, similarly to the pin terminal 11A, the pin terminal 11B is also connected to the flexible substrate 9.

The damping member 8 is formed of an elastic material such as silicone resin or urethane resin. The interior of the case 2 is filled with the damping member 8. The damping member 8 seals the flexible substrate 9 and the one of the end portions of each of the pin terminals 11A and 11B disposed in the opening of the case 2. However, since a bottom-plate-2B-side space in the case 2 is covered with the supporting member 6 and the cushioning member 7, the damping member 8 only fills an open-side space of the case 2. The damping member 8 suppresses the vibration of the side wall 2A of the case 2, and prevents the supporting member 6 and the cushioning member 7 from becoming detached from the case 2.

In the ultrasonic sensor 1 having such a structure, the vibration of the bottom plate 2B of the case 2 is attenuated by the sound absorbing member 4, the supporting member 6, and the cushioning member 7, and therefore, is scarcely transmitted to the terminal holding member 10 and the pin terminals 11A and 11B. Consequently, vibration leaks occurring from the pin terminals 11A and 11B to an external substrate when the ultrasonic sensor 1 has been mounted on the external substrate are considerably reduced.

It is desirable that the supporting member 6 and the cushioning member 7 be those that do not transmit vibration easily, and that the damping member 8 be one that suppresses (damps) vibration of the side wall 2A of the case 2. It is desirable that the supporting member 6 and the cushioning member 7 have elastic moduli that are smaller than that of the damping member 8. More specifically, elastic modulus includes storage elastic modulus and loss elastic modulus. It is desirable that the storage elastic moduli of the supporting member 6 and the cushioning member 7 be small, and the loss elastic modulus of the damping member 8 be large. For example, it is desirable that the supporting member 6 and the cushioning member 7 be formed of silicone resin (silicone rubber), and that the damping member 8 be formed of urethane resin.

Each of the pin terminals 11A and 11B and the piezoelectric element 3 are connected to each other by the flexible substrate 9. Therefore, even if an outside force is applied to the pin terminals 11A and 11B a plurality of times, since the flexible substrate 9 is elastically deformed each time the outside force is applied to the pin terminals 11A and 11B, a connection portion of the flexible substrate 9 with each of the pin terminals 11A and 11B does not fracture, as a result of which each of the pin terminals 11A and 11B and the piezoelectric element 3 are not electrically disconnected from each other. The flexible substrate 9 is a strip-shaped substrate. Since its area of contact with the damping member 8 is larger that of lead wires, even if a large outside force is applied to the pin terminals 11A and 11B at one time, localized load is not applied to the damping member 8, so that the damping member 8 does not fracture.

Here, stress that is applied to the connection portion of the flexible substrate 9 with the pin terminals 11A and 11B when an outside force is applied to the pin terminals 11A and 11B is described.

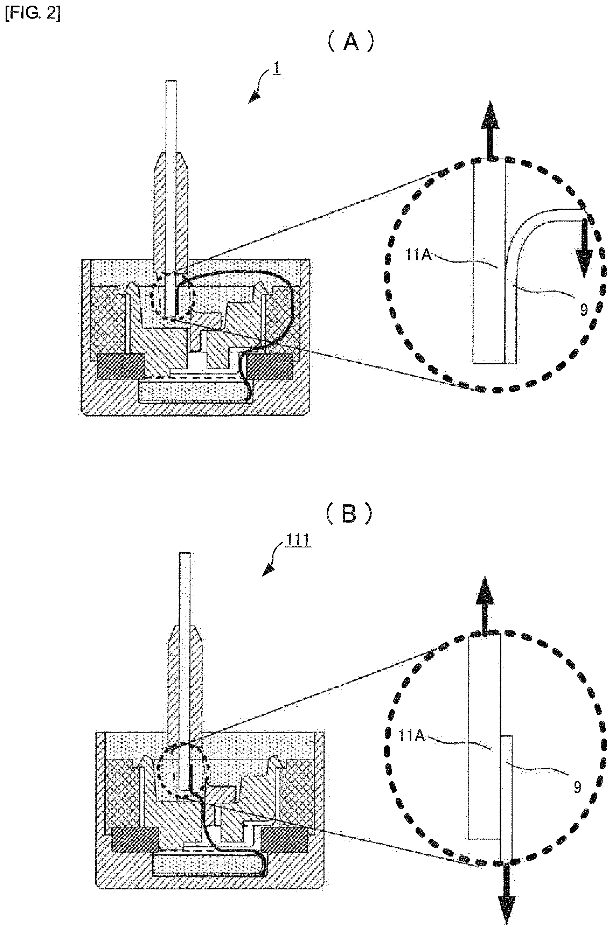

Fig. 2(A) describes stress that is applied to the connection portion in the ultrasonic sensor 1 according to the embodiment. Fig. 2(B) describes stress that is applied to a connection portion in an ultrasonic sensor 111 according to a comparative example. Although Figs. 2(A) and 2(B) only show the pin terminal 11A, similarly to the pin terminal 11A, the pin terminal 11B is also connected to the flexible substrate 9.

In the ultrasonic sensor 1, the first end of the flexible substrate 9 and the end portion of each of the pin terminals 11A and 11B extend in the same direction, and are connected to each other with solder (not shown). Since the flexible substrate 9 extends towards the side wall 2A of the case 2 from the first end serving as the connection portion with the pin terminals 11A and 11B, the flexible substrate 9 is bent with a certain curvature.

In the structure of such an ultrasonic sensor 1, when an outside force acting in a direction in which the pin terminals 11A and 11B are pulled out from the case 2 is applied to the pin terminals 11A and 11B, a force that acts in the same direction as the outside force is applied to the flexible substrate 9 at the connection portion of the flexible substrate 9 with each of the pin terminals 11A and 11B. This causes a portion of the flexible substrate 9 extending towards the side wall 2A of the case 2 to flex, and the curvature of the flexible substrate 9 to change. At this time, shear stress that is applied to the connection portion of the flexible substrate 9 with each of the pin terminals 11A and 11B is cancelled (reduced) by spring elasticity of the flexible substrate 9.

The ultrasonic sensor 111 according to the comparative example differs from the ultrasonic sensor 1 according to the embodiment in the connection portion of the flexible substrate 9 with each of the pin terminals 11A and 11B. The other structural features are the same. In the ultrasonic sensor 111, a first end of the flexible substrate 9 and the end portion of each of the pin terminals 11A and 11B extend in opposite directions, and are connected to each other with solder (not shown). The flexible substrate 9 extends in an axial direction of the case 2 from the first end serving as the connection portion with each of the pin terminals 11A and 11B.

In the structure of such an ultrasonic sensor 111, when an outside force acting in a direction in which the pin terminals 11A and 11B are pulled out from the case 2 is applied to the pin terminals 11A and 11B, a force acting in a direction opposite to the outside force is applied to the flexible substrate 9 at the connection portion of the flexible substrate 9 with each of the pin terminals 11A and 11B. This causes shear stress to be applied in a concentrated manner to the connection portion of the flexible substrate 9 with each of the pin terminals 11A and 11B. Consequently, the connection portion of the flexible substrate 9 with each of the pin terminals 11A and 11B fractures. As a result, each of the pin terminals 11A and 11B and the piezoelectric element 3 tend to be electrically disconnected from each other.

Accordingly, electrical disconnection between each of the pin terminals 11A and 11B and the piezoelectric element 3, caused by fracture at the connection portion of the flexible substrate 9 with each of the pin terminals 11A and 11B, is less likely to occur in the ultrasonic sensor 1 according to the embodiment than in the ultrasonic sensor 111 according to the comparative example.

Here, an actual device test performed for confirming that electrical disconnection between each of the pin terminals 11A and 11B and the piezoelectric element 3 is less likely to occur is described. In the actual device test, a one-point load was applied to the pin terminals 11A and 11B of the ultrasonic sensor 1 according to the embodiment and to the pin terminals 11A and 11B of the ultrasonic sensor 111 according to the comparative example until fracture occurred, and a fracture mode (fracture location) was examined for each loading direction.

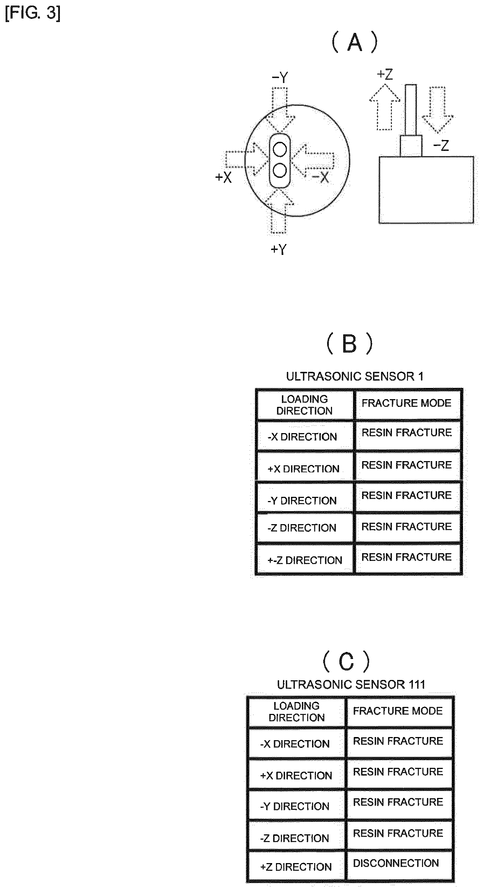

Fig. 3 shows the relationship between loading direction and fracture mode. Fig. 3(A) shows directions of loads that are applied to the pin terminals 11A and 11B. Fig. 3(B) shows the relationship between loading direction and fracture mode of the ultrasonic sensor 1 according to the embodiment. Fig. 3(C) shows the relationship between loading direction and fracture mode of the ultrasonic sensor 111 according to the comparative example. Here, loads correspond to outside forces.

When loads in side directions (+X direction, -X direction, +Y direction, and -Y direction) were applied to the pin terminals 11A and 11B so as to tilt them, resin fracture occurred before electrical disconnection between each of the pin terminals 11A and 11B and the piezoelectric element 3 in both the ultrasonic sensor 1 and the ultrasonic sensor 111. Resin fracture refers to fracture of the members formed of resin, such as the damping member 8.

Even if loads in a direction in which the pin terminals 11A and 11B are pushed into the case 2 (-Z direction) were applied to the pin terminals 11A and 11B, resin fracture occurred before electrical disconnection between each of the pin terminals 11A and 11B and the piezoelectric element 3 in both the ultrasonic sensor 1 and the ultrasonic sensor 111.

When loads in a direction in which the pin terminals 11A and 11B are pulled out from the case 2 (+Z direction) were applied to the pin terminals 11A and 11B, resin fracture occurred before electrical disconnection between each of the pin terminals 11A and 11B and the piezoelectric element 3 in the ultrasonic sensor 1. In contrast, in the ultrasonic sensor 111, electrical disconnection between each of the pin terminals 11A and 11B and the piezoelectric element 3 occurred before resin fracture.

As can be confirmed from the actual device test, in the ultrasonic sensor 1, the structure of the connection portion of the flexible substrate 9 with each of the pin terminals 11A and 11B differs from that of the ultrasonic sensor 111 according to the comparative example, so that electrical disconnection between each of the pin terminals 11A and 11B and the piezoelectric element 3 is less likely to occur in the ultrasonic sensor 1 than in the ultrasonic sensor 111.

In the embodiment, with the direction in which the first end of the flexible substrate 9 extends and the direction in which the end portions of the pin terminals 11A and 11B extend being the same, the first end of the flexible substrate 9 and the end portions of the pin terminals 11A and 11B are connected to each other. However, even if the directions in which they extend are made opposite each other, by disposing the flexible substrate 9 so as to extend from the first end, serving as the connection portion with each of the pin terminals 11A and 11B, towards the side wall 2A of the case 2 and bend with a certain curvature, the connection portion of the flexible substrate 9 with each of the pin terminals 11A and 11B does not fracture, so that it is possible to prevent electrical disconnection between each of the pin terminals 11A and 11B and the piezoelectric element 3. However, in this case, it is necessary to bend the flexible substrate 9 with a larger curvature. This causes the elastic force of the flexible substrate 9 to be large. This may cause, for example, resin fracture and undesired deformation and fracture of the pin terminals 11A and 11B and of the connection portion of the flexible substrate 9 with each of the pin terminals 11A and 11B. Therefore, it is desirable to connect the first end of the flexible substrate 9 and the end portion of each of the pin terminals 11A and 11B to each other with the direction in which the first end of the flexible substrate 9 extends and the direction in which the end portions of the pin terminals 11A and 11B extend being the same.

### «Second Embodiment»

Next, an exemplary structure of an ultrasonic sensor 21 according to a second embodiment of the present invention is described.

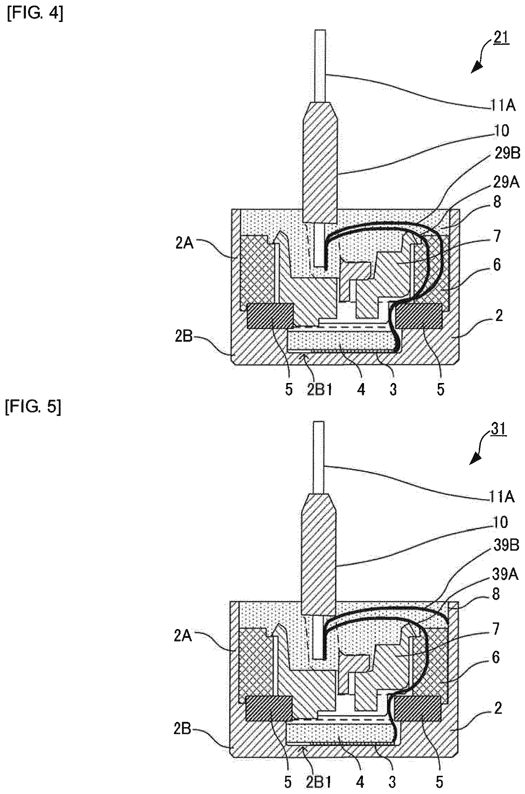

Fig. 4 is a sectional view of the ultrasonic sensor 21 according to the second embodiment of the present invention. The ultrasonic sensor 21 includes two flexible substrates, a flexible substrate 29A and a flexible substrate 29B. The flexible substrate 29A electrically connects a pin terminal 11A and one of a pair of electrodes of a piezoelectric element 3 to each other. The flexible substrate 29B electrically connects a pin terminal 11B (not shown) and the other of the pair of electrodes of the piezoelectric element 3 to each other. In this way, a plurality of flexible substrates 29A and 29B may be provided for electrical connection with the electrodes of the piezoelectric element 3, respectively.

### «Third Embodiment»

Next, an exemplary structure of an ultrasonic sensor 31 according to a third embodiment of the present invention is described.

Fig. 5 is a sectional view of the ultrasonic sensor 31 according to the third embodiment of the present invention. The ultrasonic sensor 31 includes two flexible substrates, a flexible substrate 39A and a flexible substrate 39B. The flexible substrate 39A electrically connects a pin terminal 11A and one of a pair of electrodes of a piezoelectric element 3. The flexible substrate 39B electrically connects a pin terminal 11B (not shown) and a case 2 to each other. The pin terminal 11B is electrically connected to the other of the pair of electrodes (ground potential) of the piezoelectric element 3 via the flexible substrate 39B and the case 102.

As described in each of the above-described embodiments, the present invention can be carried out. However, the specific structures of the ultrasonic sensor are not limited to those described above. For example, the cushioning member, the supporting member, the reinforcing member, the supporting member, and the sound absorbing member may be of any specific shape or may be formed of any specific material. In addition, the cushioning member, the supporting member, the reinforcing member, and the sound absorbing member are not necessarily provided.

### Reference Signs List

1, 21, 31 ultrasonic sensor
2 case
2A side wall
2B bottom plate
2B1 recessed portion
3 piezoelectric element
4 sound absorbing member
5 reinforcing member
6 supporting member
7 cushioning member
8 damping member
9, 29A, 29B, 39A, 39B flexible substrate
10 terminal holding member
11A, 11B pin terminal

## Claims

1. An ultrasonic sensor (1; 21; 31) comprising:
a cylindrical case (2) having a bottom which includes a bottom plate (2B) and a side wall (2A);
a piezoelectric element (3) that is disposed at the bottom plate in the case;
a pin terminal (11A, 11B), one of end portions thereof being disposed in the case and the other end portion thereof being disposed outside of the case;
a strip-shaped flexible substrate (9; 29A, 29B; 39A; 39B) including a first end and a second end, the first end being connected to the one of the end portions of the pin terminal, the second end being connected to the piezoelectric element; and
a damping member (8) that seals the one of the end portions of the pin terminal and the flexible substrate in the case,
wherein the flexible substrate is bent and disposed in the case so that the first end connected to the one of the end portions of the pin terminal extends in a same direction as the one of the end portions of the pin terminal and is connected to the pin terminal over a substantial portion of the end portion of the pin terminal and so that the flexible substrate bends from the first end, extends towards the side wall of the case, and terminates in the second end.

2. The ultrasonic sensor (1; 21; 31) according to claim 1, wherein the one of the end portions of the pin terminal (11A, 11B) is soldered to the first end of the flexible substrate (9; 29A, 29B; 39A; 39B).

## Patentansprüche

1. Ultraschallsensor (1; 21; 31), umfassend:
ein zylindrisches Gehäuse (2), das einen Boden, der eine Bodenplatte (2B) umfasst, und eine Seitenwand (2A) aufweist;
ein piezoelektrisches Element (3), das an der Bodenplatte in dem Gehäuse angeordnet ist;
einen Stiftanschluss (11A, 11B), wobei einer der Endabschnitte davon in dem Gehäuse angeordnet ist und der andere Endabschnitt davon außerhalb des Gehäuses angeordnet ist;
ein streifenförmiges flexibles Substrat (9; 29A, 29B; 39A; 39B), das ein erstes Ende und ein zweites Ende aufweist, wobei das erste Ende mit dem einen der Endabschnitte des Stiftanschlusses verbunden ist, das zweite Ende mit dem piezoelektrischen Element verbunden ist; und
ein Dämpfungselement (8), das den einen der Endabschnitte des Stiftanschlusses und das flexible Substrat in dem Gehäuse versiegelt,
wobei das flexible Substrat gebogen und in dem Gehäuse so angeordnet ist, dass das erste Ende, das mit dem einen der Endabschnitte des Stiftanschlusses verbunden ist, sich in die gleiche Richtung wie der eine der Endabschnitte des Stiftanschlusses erstreckt und über einen beträchtlichen Teil des Endabschnitts des Stiftanschlusses mit dem Stiftanschluss verbunden ist und so, dass das flexible Substrat sich von dem ersten Ende her biegt, sich in Richtung der Seitenwand des Gehäuses erstreckt und in dem zweiten Ende abschließt.

2. Ultraschallsensor (1; 21; 31) nach Anspruch 1, wobei der eine der Endabschnitte des Stiftanschlusses (11A, 11B) mit dem ersten Ende des flexiblen Substrats (9; 29A, 29B; 39A; 39B) verlötet ist.

## Revendications

1. Capteur à ultra-sons (1 ; 21 ; 31) comprenant :
un boîtier cylindrique (2) ayant un fond qui comprend une plaque de fond et une paroi latérale (2A) ;
un élément piézoélectrique (3) qui est disposé sur la plaque de fond dans le boîtier ;
une borne à broche (11A, 11B), l'une des partie d'extrémité de laquelle étant disposée dans le boîtier et l'autre partie d'extrémité étant disposée hors du boîtier ;
un substrat flexible en forme de bande (9 ; 29A, 29B ; 39A, 39B) comprenant une première extrémité et une deuxième extrémité, la première extrémité étant connectée à l'une des parties d'extrémité de la borne à broche, la deuxième extrémité étant connectée à l'élément piézoélectrique ; et
un membre d'amortissement (8) qui scelle l'une des parties d'extrémité de la borne à broche et le substrat flexible dans le boîtier,
dans lequel le substrat flexible est courbé et disposé dans le boîtier de manière telle que la première extrémité connectée à l'une des parties d'extrémité de la borne à broche s'étend dans une même direction que l'une des parties d'extrémité de la borne à broche et est connectée à la borne à broche au-dessus d'une partie du substrat de la partie d'extrémité de la borne à broche et de manière telle que le substrat flexible se courbe de la première extrémité, s'étend vers la paroi latérale du boîtier, et se termine dans la deuxième extrémité.

2. Capteur à ultra-sons (1 ; 21 ; 31) selon la revendication 1, dans lequel l'une des parties d'extrémité de la borne à broche (11A, 11B) est soudée à la première extrémité du substrat flexible (9 ; 29A, 29B ; 39A, 39B).
